# EUROPÄISCHE PATENTSCHRIFT

(11) **EP 0 578 969 B1**
(45) Veröffentlichungstag und Bekanntmachung des Hinweises auf die Patenterteilung: **10.09.1997**
(21) Anmeldenummer: 93109277.9
(22) Anmeldetag: 09.06.1993
(51) Int. Cl.: A61C 8/00, A61C 13/235

(54) **Magnetanordnung für eine Prothese**
Magnet assembly for a prosthesis
Système d'aimants pour une prothèse

(30) Priorität: 12.06.1992 DE 9207951 U
(43) Veröffentlichungstag der Anmeldung: 19.01.1994
(60) Teilanmeldung: 94111876.2
(73) Patentinhaber: Stemmann, Hartmut, D-22529 Hamburg (DE)
(72) Erfinder: Stemmann, Hartmut, D-22529 Hamburg (DE)
(74) Vertreter: Klingseisen, Franz, Dipl.-Ing.

(56) Entgegenhaltungen:
- DE-U- 8 803 488
- DE-U- 9 207 951
- US-A- 4 184 252
- US-A- 4 302 189
- US-A- 4 508 507

## Beschreibung

Die Erfindung betrifft eine Magnetanordnung nach dem Oberbegriff des Patentanspruchs 1.

Aus DE-U 88 03 488 ist eine Vorrichtung zur magnetischen Befestigung von Zahnprothesen auf dentalen Implantaten oder Zahnwurzeln gemäß dem Oberbegriff von Anspruch 1 bekannt, wobei auf einem konvexen Magnet, der mit dem Implantat verbunden ist, ein konkaver Magnet angeordnet ist, der in der Prothese angeordnet ist. Ein ähnlicher Aufbau einer Magnetanordnung ist aus US-A-4,184 252 und US-A-4,508 507 bekannt.

Der Erfindung liegt die Aufgabe zugrunde, eine Magnetanordnung dieser Art so auszubilden, daß sich eine gute Selbstzentrierwirkung der aufeinanderliegenden Magnete ergibt.

Diese Aufgabe wird durch die Merkmale im kennzeichnenden Teil des Anspruchs 1 gelöst. Bei dieser Ausgestaltung wird durch die abgeplattete Fläche in der Mitte der konvexen Fläche bei einer Auslenkung des konkaven Teils gegenüber dem konvexen Teil die automatische Zentrierwirkung zwischen den beiden Magneten unterstützt, wobei der Druck auf den gegenüber der Mitte tiefer liegenden, konvexen Außenrand verteilt wird.

Bei der aus dem Stand der Technik bekannten Ausführungsform mit durchgehend konvexer Kugelfläche wird bei einer Auslenkung der beiden Magnete, wenn z.B. der obere Magnet quer zur Achse der Magnetanordnung verschoben wird, dieser obere Magnet stärker von dem unteren Magneten abgehoben. Durch die Abflachung bei der erfindungsgemäßen Ausführungsform wird der obere Magnet 3 nicht so stark abgehoben, wenn er quer zur Achse bewegt wird.

Eine beispielsweise Ausführungsform der Erfindung wird nachfolgend anhand der Zeichnung näher erläutert.

Es zeigen:
- Fig. 1: in einem Längsschnitt zwei aneinanderliegende zylindrische Magnete,
- Fig. 2: im Schnitt die beiden Magneten in Verbindung mit einer Positioniervorrichtung, und
- Fig. 3: die Positioniervorrichtung im Schnitt.

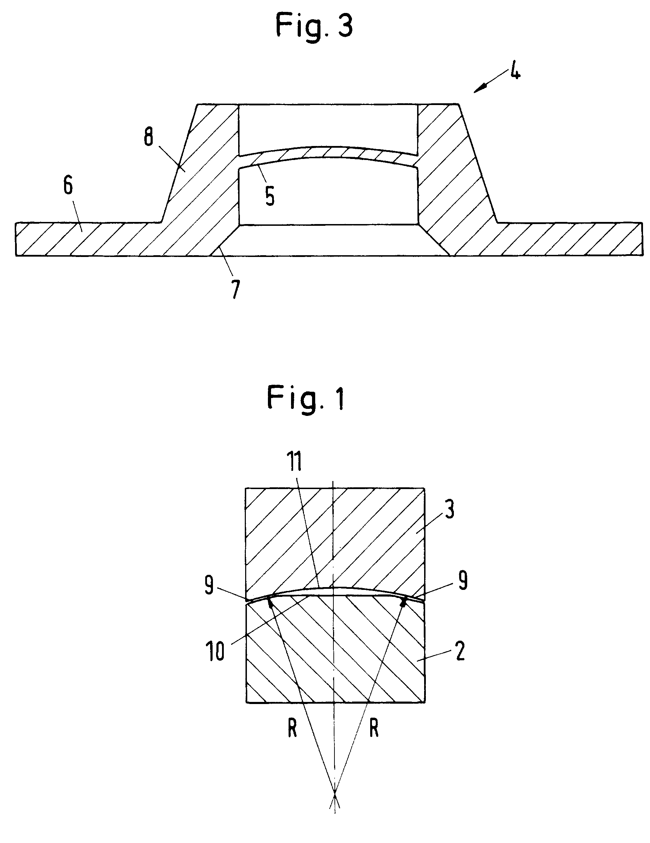

Fig. 1 zeigt im Längsschnitt einen zylindrischen Magneten 2, der implantiert oder an einem Implantat befestigt wird, und einen gegenüberliegenden zylindrischen Magneten 3, der in einer nicht dargestellten Prothese befestigt wird. Die zur Längsachse des zylindrischen Magneten 2 senkrecht liegende Stirnfläche 10 ist im Randbereich 9 derart abgerundet, daß sich eine konvexe Kugelringfläche 9 mit einem Radius R ausgehend von der Achse des zylindrischen Magneten ergibt.

Die gegenüberliegende Stirnfläche 11 des Magneten 3 ist durchgehend konkav ausgebildet mit dem gleichen Kugelradius R, so daß die beiden aneinanderliegenden Magneten 2 und 3 nur im Randbereich 9 aufeinander liegen, während im Mittelbereich der ebenen Stirnfläche 10 ein Abstand zwischen den gegenüberliegenden Flächen vorhanden ist. Auf diese Weise wird ein Druckpunkt in der Mitte des Magneten beim Tragen der Prothese vermieden, und es ergibt sich eine Selbstzentrierwirkung der aufeinander liegenden Magneten 2 und 3, wenn der in der Prothese angeordnete Magnet 3 gegenüber dem implantierten Magneten 2 durch Verschiebebewegungen der Prothese ausgelenkt wird.

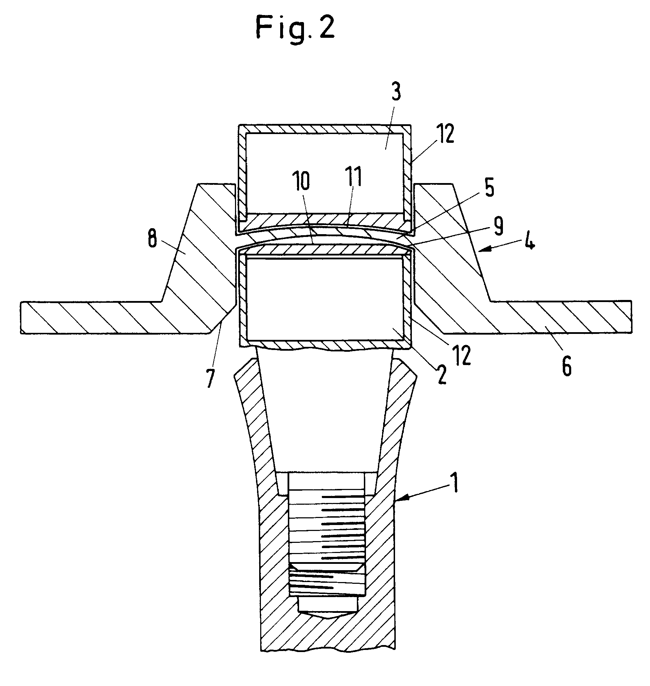

Fig. 2 zeigt eine Magnetanordnung mit jeweils in einer Ummantelung 12 eingeschweißten Magneten 2 und 3, wobei die konkave Fläche 11 und die Kugelringfläche 9 an den gegenüberliegenden Flächen der jeweiligen Ummantelung 12 ausgebildet sind. Bei 1 ist der Kopfteil eines Dental-Implantates schematisch angedeutet, in das der zylindrische Magnet 2 mit Ummantelung 12 eingesetzt ist. Zur Erleichterung der genauen Positionierung des Magneten 3 in einer nicht dargestellten Zahnprothese ist ein hülsenförmiges Element 4 aus einem im medizinischen Bereich zugelassenen Weich-Silikon vorgesehen. Das hülsenförmige Element 4 mit dem Hülsenkörper 8 hat im unteren Abschnitt einen Innendurchmesser entsprechend dem Außendurchmesser des implantierten Magneten 2, 12, so daß der Hülsenkörper 8 aufgesteckt werden kann. Auf dem Innenumfang ist der Hülsenkörper 8 mit einer Trennwand 5 von vorbestimmter Dickenabmessung versehen, die einerseits die Eintauchtiefe des implantierten Magneten 2, 12 in den Hülsenkörper 8 begrenzt und andererseits als Distanzhalter für den von oben in den Hülsenkörper 8 eingesteckten Magneten 3, 12 dient. Der obere Abschnitt des Hülsenkörpers 8 hat deshalb einen Innendurchmesser entsprechend dem Außendurchmesser des Magneten 3, 12. Die Trennwand 5 ergibt einen definierten Luftspalt zwischen den Magneten, der die unterschiedliche Nachgiebigkeit der Kieferschleimhaut bei durch Kaubewegungen auftretender Belastung durch die Zahnprothese ausgleicht.

Der Hülsenkörper 8 hat im oberen Bereich eine Wandstärke von etwa 1 mm, die sich nach unten auf etwa 2 mm vergrößert, so daß sich ein kegelstumpfförmiger Außenumfang des Hülsenkörpers 8 ergibt. Vom unteren Rand des Hülsenkörpers 8 erstreckt sich ein Abdeckflansch 6 radial nach außen. Er kann beispielsweise einen Außendurchmesser von etwa 16 mm haben. Dieser Flansch 6 dient zur Abdeckung der Schleimhaut, und er kann vom Zahnarzt entsprechend den jeweiligen Kieferverhältnissen durch Beschneiden angepaßt werden. Zum leichteren Aufstecken des Elementes 4 auf den implantierten Magneten 2, 12 ist die untere Öffnung des Hülsenkörpers 8 bei 7 abgeschrägt.

Beim Anbringen der Magnethalterung wird zunächst der untere Magnet 2, 12 in das Implantat eingeschraubt, worauf das Element 4 aus Weich-Silikon auf den Magneten 2, 12 aufgesteckt wird. Der Flansch 6 deckt die Schleimhaut ab und der dickere untere Abschnitt des Hülsenkörpers 8 umschließt den Magneten 2, 12 fest. Die Trennwand 5 liegt vor allem auf der Kugelringfläche 9 auf. Zu diesem Zweck ist die Trennwand 5 etwas nach oben gewölbt am Hülsenkörper angeformt, wie Fig. 3 zeigt. Hierauf wird der obere Magnet 3 bis zum Anschlag an der Trennwand 5 eingedrückt. Der Abstand zwischen oberem Rand des Hülsenkörpers 8 und der Trennwand 5 ist so ausgelegt, daß der Magnet 3, 12 um einen vorgegebenen Betrag von beispielsweise 1,5 mm aus dem Hülsenkörper 8 herausragt. Mit dieser freiliegenden Retentionsfläche wird der obere Magnet 3, 12 in die vorgefertigte Aussparung der nicht dargestellten Zahnprothese eingesetzt. Hierauf wird mittels flüssigem Autopolymerisat der Magnet 3, 12 in die Prothese einpolymerisiert. Der Hülsenkörper 8 mit Abdeckflansch 6 und Trennwand 5 verhindert, daß das flüssige Autopolymerisat den Magneten 2, 12 und das Implantat benetzt.

Nach dem Aushärten des Polymerisats wird das Element 4 abgenommen. Durch die Kegelform des Hülsenkörpers 8 ergibt sich ein vorbestimmter Hohlraum zwischen Zahnprothesenbasis und dem Implantatoberteil bzw. Magneten 2, 12, der in die Mundhöhle hineinragt, so daß bei einer Verschiebebewegung der Prothese quer zur Längsachse die Prothesenbasis sich nicht am Magneten 2, 12 abstützen kann. Auf diese Weise wird eine Beschädigung der Prothese verhindert, und es werden unerwünschte, auf das Implantat schädlich wirkende horizontale Schubkräfte von der Prothese nicht auf das fest im Knochen verankerte Implantat übertragen.

Die gesamte Höhe des Elementes 4 bei dem dargestellten Ausführungsbeispiel kann beispielsweise 3,7 mm betragen. Der Innendurchmesser beträgt 4,4 mm. Die Trennwand 5 kann mit unterschiedlicher Stärke ausgelegt sein, damit der Luftspalt zwischen den Magneten an unterschiedliche Nachgiebigkeiten der Mundschleimhaut angepaßt werden kann. Es ist auch eine Ausführungsform möglich, bei der die Trennwand 5 entfällt, beispielsweise bei einer endständigen Zahnkrone. In diesem Falle könnten die beiden Magnete direkt aufeinander liegen, wie Fig. 1 zeigt, wobei sie durch den Hülsenkörper 8 zueinander zentriert werden.

Anstelle der Trennwand 5 können auch radial nach innen ragende Laschen als Distanzhalter an den Hülsenkörper 8 angeformt sein. Vorzugsweise wird eine geschlossene Trennwand 5 vorgesehen, um ein Eindringen von flüssigem Polymerisat zu verhindern.

Das Element 4 kann nicht nur zum Zentrieren der Magnetanordnung nach Fig. 1 verwendet werden, sondern auch für andere Magnetpaarungen, bei denen die beiden Magneten über eine senkrecht zur Längsachse verlaufende ebene Stirnseite einander gegenüberliegen.

## Patentansprüche

1. Magnetanordnung mit einander gegenüberliegenden zylindrischen Magneten (2,3) für eine Prothesenhalterung, wobei ein Magnet (2) zu implantieren oder an einem Implantat zu befestigen ist und der gegenüberliegende Magnet (3) in einer Prothese, insbesondere Zahnprothese, anzubringen ist, und wobei
die Anlagefläche des einen Magneten (2) konvex und die Anlagefläche (11) des gegenüberliegenden Magneten (3) konkav entsprechend dem Krümmungsradius (R) der konvexen Anlagefläche des anderen Magneten ausgebildet ist,
dadurch gekennzeichnet,
daß die Anlagefläche des einen Magneten (2) im Randbereich (9) konvex und im Mittelbereich mit einer senkrecht zur Längsachse verlaufenden Fläche (10) abgeflacht ausgebildet ist.

2. Magnetanordnung nach Anspruch 1,
gekennzeichnet durch ein auf den implantierten oder an einem Implantat befestigten Magneten (2) aufsteckbares, hülsenförmiges Element (4), in das der in der Prothese zu positionierende Magnet (3) einsteckbar ist.

3. Magnetanordnung nach Anspruch 2,
dadurch gekennzeichnet,
daß auf den Innumfang des hülsenförmigen Elementes (4) eine Trennwand (5) ausgebildet ist, welche die beiden Magneten (2,3) in einem vorbestimmten Abstand voneinander hält.

4. Magnetanordnung nach Anspruch 2,
dadurch gekennzeichnet,
daß das Element (4) einen kegelstumpfförmigen Hülsenkörper (8) aufweist.

5. Magnetanordnung nach Anspruch 2,
dadurch gekennzeichnet,
daß sich vom unteren Rand des Elementes (4) radial nach außen ein Abdeckflansch (6) erstreckt.

6. Magnetanordnung nach Anspruch 2,
dadurch gekennzeichnet,
daß das Element (4) aus einem körperverträglichen Weich-Silikon besteht.

7. Magnetanordnung nach Anspruch 1, dadurch gekennzeichnet,
daß die Anlagefläche (11) des Magneten (3) durchgehend konkav ausgebildet ist.

## Claims

1. Magnet arrangement comprising
mutually opposing cylindrical magnets (2,3) for securing a prosthesis, wherein one magnet (2) is to be implanted or to be fastened to an implant and the opposing magnet (3) is fitted in a prosthesis, in particular a dental prosthesis, and wherein the bearing surface of the one magnet (2) is of convex configuration and the bearing surface (11) of the opposing magnet (3) is of concave configuration corresponding to the radius (R) of the convex bearing surface of the other magnet,
**characterized in that**
the bearing surface of the one magnet (2) is of convex configuration in the marginal area (9) and in the central region flat with a surface (10) oriented perpendicular to the longitudinal axis, whereas the bearing surface (11) of the other magnet (3) is of throughout concave configuration.

2. Magnet arrangement according to claim 1,
characterized
by a sleeve-like element (4) which can be mounted on the implanted magnet (2) or on the magnet (2) fastened on an implant, into which element the magnet (3) which is to be positioned in the prosthesis can be mounted.

3. Magnet arrangement according to claim 2,
characterized in that
on the inner circumference of the sleeve-like element (4) a partition wall (5) is formed which keeps the two magnets (2,3) at a predetermined distance from each other.

4. Magnet arrangement according to claim 2,
characterized in that
the element (4) has a frustoconical sleeve body (8).

5. Magnet arrangement according to claim 2,
characterized in that
from the lower edge of the element (4) extends radially towards outside a cover flange (6).

6. Magnet arrangement according to claim 2,
characterized in that
the element (4) consists of a body-tolerated soft-silicone.

7. Magnet arrangement according to claim 1,
characterized in that
the bearing surface (11) of the magnet (3) is of continuous concave configuration.

## Revendications

1. Dispositif magnétique comportant des aimants cylindriques en regard l'un de l'autre (2, 3), pour une fixation de prothèse, un aimant (2) étant implanté ou fixé sur un implant et l'aimant en regard (3) étant disposé dans une prothèse, notamment une prothèse dentaire et la surface d'appui d'un aimant (2) étant de configuration convexe et la surface d'appui (11) de l'aimant en regard (3) étant de configuration concave correspondant au rayon de courbure (R) de la face d'appui convexe de l'autre aimant,
caractérisé en ce que
la face d'appui d'un aimant (2) étant de configuration convexe dans la zone marginale (9) et dans la zone médiane aplatie par une face (10) s'étendant perpendiculairement à l'axe longitudinal.

2. Dispositif magnétique selon la revendication 1,
caractérisé par
un élément en forme de douille (4), embrochable sur l'aimant (2) implanté ou fixé sur un implant, dans lequel l'aimant (3) à positionner est enfichable dans la prothèse.

3. Dispositif magnétique selon la revendication 2,
caractérisé en ce qu'
une cloison (5) est disposée sur la périphérie interne de l'élément en forme de douille (4), cloison qui maintient les deux aimants (2, 3) à une distance prédéterminée entre eux.

4. Dispositif magnétique selon la revendication 2,
caractérisé en ce que
l'élément (4) présente un corps de douille (8) en forme de cône tronqué.

5. Dispositif magnétique selon la revendication 2,
caractérisé en ce qu'
une aile de recouvrement (6) s'étend à partir du bord inférieur de l'élément (4) radialement vers l'extérieur.

6. Dispositif magnétique selon la revendication 2,
caractérisé en ce que
l'élément (4) est réalisé à partir d'une silicone molle, physiologiquement compatible.

7. Dispositif magnétique selon la revendication 1,
caractérisé en ce que
la face d'appui (11) de l'aimant (3) est de configuration concave continue.
